# EUROPÄISCHE PATENTSCHRIFT

(11) **EP 0 732 657 B1**
(45) Veröffentlichungstag und Bekanntmachung des Hinweises auf die Patenterteilung: **06.02.2002**
(21) Anmeldenummer: 95103612.8
(22) Anmeldetag: 14.03.1995
(51) Int. Cl.: G06F 12/14, G06F 1/00

(54) **Verfahren und Vorrichtung zum Verschlüsseln und Entschlüsseln von Information**
Method and apparatus for enciphering and deciphering information
Méthode et dispositif pour chiffrer et déchiffrer de l'information

(43) Veröffentlichungstag der Anmeldung: 18.09.1996
(73) Patentinhaber: Utimaco Safeware AG, D-61440 Oberursel (DE)
(72) Erfinder: Koke, Andreas, D-85659 Forstern (DE); Schneider, Christian, Dr., D-81679 München (DE)
(74) Vertreter: Freiherr von Gravenreuth, Günter, Dipl.-Ing. (FH)

(56) Entgegenhaltungen:
- EP-A- 0 471 538
- EP-A- 0 638 866
- US-A- 5 081 675

## Beschreibung

Die Erfindung betrifft ein Verfahren gemäß dem Oberbegriff des Verfahrensanspruchs 1 und eine Vorrichtung gemäß dem Oberbegriff des Vorrichtungsanspruchs 3.

Bei bekannten Vorrichtungen und Verfahren wie etwa in den EP 0171 456 A1, EP 0 638 866 A1, EP 047 1538 A2 und US A 5 081 675 beschrieben, wird durch die kryptographische Einheit ein fester kryptographischer Algorithmus verwendet, der über die gesamte Benutzungsdauer der kryptografischen Einheit unverändert bleibt.

Nachteilig ist beim bekannten Stand der Technik anzusehen, daß über einen langen Anwendungs-Zeitraum die Gefahr besteht, daß Unbefugte Kenntnis vom verwendeten Algorithmus erlangen und so unberechtigt Zugang zu den verschlüsselten Daten erhalten. Ein weiterer Nachteil insbesondere aus Sicht des Anwenders besteht darin, daß der Hersteller und Vertreiber des kryptographischen Verfahrens den Algorithmus mit welchem die Daten verschlüsselt wurden, kennt und der Anwender nicht sicher sein kann, daß nicht der Hersteller oder Vertreiber der kryptographischen Verfahren (oder einer deren Mitarbeiter) die Daten problemlos entschlüsselt.

Es ist daher Aufgabe der Erfindung, ein Verfahren und eine Vorrichtung zur Durchführung des Verfahrens zu schaffen, womit die Nachteile des Standes der Technik überwunden werden können und insbesondere eine sichere Verschlüsselung mit einem Höchstmaß an Schutz vor unbefugter Entschlüsselung erreicht wird.

Erfindungsgemäß wird diese Aufgabe gelöst durch die im kennzeichnenden Teil des Verfahrensanspruchs 1 und des Vorrichtungsanspruchs 3 angegebenen Merkmale.

Die in den Unteransprüchen angegebenen Merkmale kennzeichnen besondere Ausführungsformen bzw. Ausgestaltungen der Erfindung.

Die Erfindung machte sich hierbei die Erkenntnis zu eigen, daß die Wahrscheinlichkeit durch systematisches Vorgehen den kryptographischen Algorithmus zu entschlüsseln steigt, je länger der Algorithmus in Einsatz ist.

Eine andere Überlegung, welche in die gleiche Richtung geht, betraf die Sorge von Anwendern, daß einem Hersteller und/oder Vertreiber der kryptographischen Verfahren der kryptographische Algorithmus bekannt ist.

Als Lösung zur Abhilfe der bestehenden Probleme wurde herausgefunden, daß der kryptographische Algorithmus veränderbar sein muß, diese Änderungen aber nur der Anwender kennen soll.

Nachfolgend wird die Erfindung anhand einer Zeichnungen näher erläutert.

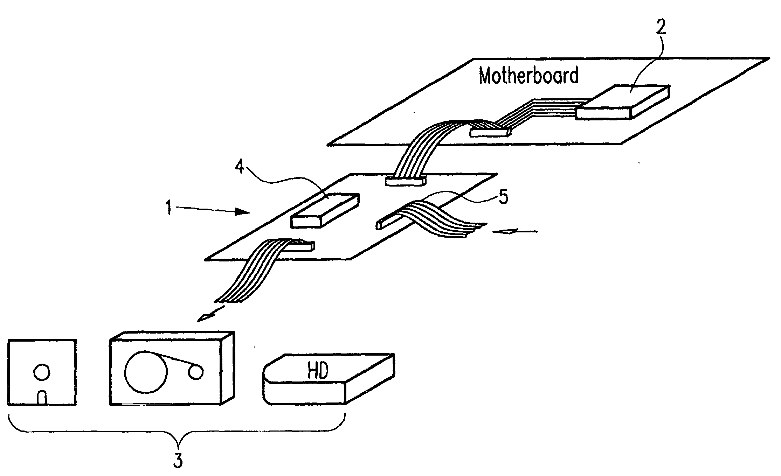

Die Figur zeigt eine kryptographische Einheit (1), welche zwischen einem beliebigen ersten Prozessor (2) und einem Massenspeicher (3) eingeschleift ist.

Die kryptographische Einheit (1) enthält neben anderen Bauteilen, auf deren Funktionsweise hier aus Gründen der Übersichtlichkeit nicht eingegangen wird, einen eigenen Prozessor mit einem eigenen Speicher (4). In diesem Speicher (4) ist der kryptographische Algorithmus hinterlegt, der vom Anwender beliebig löschbar und/oder durch einen anderen kryptographischen Alogarithmus austauschbar ist.

Über eine aus Gründen der Übersichtlichkeit nicht gezeichnete, mit dem Prozessor (2) verbundene Eingabeeinheit sind unverschlüsselte Informationen in die erfindungsgemäße Vorrichtung eingebbar.

Durch eine ebenfalls nicht dargestellte, mit dem Prozessor (2) verbundene Ausgabeeinheit sind die Informationen unverschlüsselt darstellbar.

Daten die vom ersten Prozessor (2) kommen, werden durch die kryptographische Einheit (1) verschlüsselt, bevor sie auf den Massenspeicher (3) abgelegt werden. Dies erfolgt durch den eigenen Prozessor der kryptographischen Einheit (1) mit Hilfe des in den Speicher (4) hinterlegten kryptographischen Algorithmus.

Des gleichen kryptographischen Algorithmus bedient man sich, um auf die verschlüsselt im Massenspeicher (3) vorhandenen Daten wieder zugreifen zu können.

Um den kryptographischen Algorithmus nun zu ändern, wird der Inhalt des Speicher (4) komplett durch einen anderen Inhalt ersetzt und/oder gelöscht.

Dies geschieht durch das Überschreiben des bisher im Einsatz befindlichen kryptographischen Algorithmus durch einen anderen Algorithmus.

Dieses Überschreiben kann beispielsweise erfolgen, indem man über eine Schnittstelle (5) einen neuen kryptographischen Algorithmus in den Speicher (4) überträgt.

Der Speicher (4) ist hierbei vorzugsweise so gestaltet, daß sein Inhalt wohl überschrieben, aber nicht ausgelesen werden kann. Dies kann beispielsweise dadurch erfolgen, daß der Speicher (4) und der eigene Prozessor der kryptographischen Einheit (1) in einen Baustein zusammengefaßt sind. Der eigene Prozessor der kryptographischen Einheit (1) kann hierbei so konzipiert sein, daß er ein Auslesen seines Speichers (4) verhindert.

Welcher kryptographische Algorithmus sich momentan im Speicher (4) befindet und somit für die Ver- und Entschlüsselung verwendet wird, ist somit selbst dem Hersteller und Vertreiber der kryptographischen Einheit (1) unbekannt.

Die Erfindung bietet daher über das bekannte Maß an Sicherheit, wie es durch den Stand der Technik vorgegeben ist, eine zusätzliche, qualitativ erhöhte Sicherheit.

### Bezügszeichenliste:

- 1: kryptographischen Einheit
- 2: erster Prozessor
- 3: Massenspeicher
- 4: Speicher der kryptographischen Einheit
- 5: Schnittstelle

## Patentansprüche

1. Verfahren zum Verschlüsseln und Entschlüsseln von Information, zum Speichern der verschlüsselten Information, zum Entschlüsseln der verschlüsselt gespeicherten Information, wobei
- ein erster Prozessor (2) zur Verarbeitung von Information ver-wendet wird,
- über eine mit dem ersten Prozessor (2) verbundene Eingabeeinheit die unverschlüsselte Information eingegeben und dem ersten Prozessor (2) zugeführt wird,
- auf einer mit dem ersten Prozessor (2) verbundenen Ausgabeeinheit die Information in unverschlüsselter Form angezeigt wird,
- mit einer kryptographischen Einheit (1) die Information unter Anwendung eines kryptographischen Algorithmus verschlüsselt und wieder entschlüsselt wird,
- in einem Massenspeicher (3) die verschlüsselte Information gespeichert wird und aus dem die verschlüsselte Information wieder ausgelesen wird,
- die kryptographische Einheit (1) zwischen dem ersten Prozessor (2) und dem Massenspeicher (3) angeordnet wird,
**dadurch gekennzeichnet, daß**
- **der kryptographischen Einheit (1) ein eigener Prozessor und ein eigener Speicher (4), in welchem der kryptographische Algorithmus enthalten ist, zugeordnet werden,**
- **durch** den eigenen, der kryptographischen Einheit (1) zugeordneten Prozessor ein Be- oder Überschreiben des Speichers (4) der kryptographischen Einheit (1) mit einem kryptographischen Algorithmus ermöglicht wird, und
- **der im Speicher (4) enthaltene kryptographische Algorithmus nur vom Anwender beliebig löschbar und/oder durch einen anderen kryptographischen Algorithmus austauschbar ist.**

2. Verfahren nach Anspruch 1, **dadurch gekennzeichnet, daß** der Algorithmus aus der kryptographischen Einheit (1) nicht ausgelesen werden kann.

3. Vorrichtung, zum Verschlüsseln und Entschlüsseln von Information, zum Speichern der verschlüsselten Information, zum Entschlüsseln der verschlüsselt gespeicherten Information, mit
- einem ersten Prozessor (2) zur Verarbeitung von Information,
- einer mit dem ersten Prozessor (2) verbundenen Eingabeeinheit, über welche die unverschlüsselte Information eingebbar und dem ersten Prozessor (2) zuführbar ist,
- einer mit dem ersten Prozessor (2) verbundenen Ausgabeeinheit, auf welcher die Information in unverschlüsselter Form anzeigbar ist,
- einer kryptographischen Einheit (1), mit welcher die Information unter Verwendung eines kryptographischen Algorithmus verschlüsselbar und wieder entschlüsselbar ist,
- einem Massenspeicher (3) in dem die verschlüsselte Information speicherbar ist und aus dem die verschlüsselte Information wieder auslesbar ist, wobei die kryptographische Einheit (1) zwischen dem ersten Prozessor (2) und dem Massenspeicher (3) angeordnet ist,
**dadurch gekennzeichnet, daß**
- der kryptographischen Einheit (1) ein eigener Prozessor und ein eigener Speicher (4), in welchem der kryptographische Algorithmus enthalten ist, zugeordnet werden,
- **durch den eigenen, der kryptographischen Einheit (1) zugeordneten Prozessor ein Be- oder Überschreiben des Speichers (4) der kryptographischen Einheit (1) mit einem kryptographischen Algorithmus ermöglicht wird, und**
- der im Speicher (4) enthaltene kryptographische Algorithmus nur vom Anwender beliebig löschbar und/oder durch einen anderen kryptographischen Algorithmus austauschbar ist.

4. Vorrichtung nach Anspruch 3, **dadurch gekennzeichnet, daß** die kryptographische Einheit (1) eine Schnittstelle (5) aufweist, über welche ein beliebiger kryptographischer Algorithmus in den Speicher (4) übertragbar ist.

5. Vorrichtung nach Anspruch 3 oder 4, **dadurch gekennzeichnet, daß** der Speicher (4) nicht auslesbar ist.

6. Vorrichtung nach einem oder mehreren der Ansprüche 3 bis 5, **dadurch gekennzeichnet, daß** der, der kryptographischen Einheit (1) zugeordnete Prozessor und der Speicher (4) in einen Bauteil integriert sind.

## Claims

1. Process for coding and decoding information, for storing coded information and for decoding information previously coded and stored, according to which
- use is made of a first processor (2) for processing information,
- the non-coded information is input via an input unit linked to the first processor (2) and fed to the first processor (2),
- the information is displayed in non-coded form on an output unit linked to the first processor (2),
- the information is coded and afterwards decoded again by means of a cryptographic unit (1) applying a cryptographic algorithm,
- the coded information is stored in a bulk-storage memory module (3), from which the said coded information is afterwards read out again,
- the cryptographic unit (1) is installed between the first processor (2) and the bulk-storage memory module (3),
**characterized by**
- the cryptographic unit (1) having its own processor and own memory module (4) assigned to it, the latter containing the said cryptographic algorithm,
- the possibility of inscribing or overwriting the memory module (4) of the cryptographic unit (1) with a cryptographic algorithm by means of the processor having the cryptographic unit (1) allocated to it, and
- the cryptographic algorithm contained in the memory module (4) only being erasable at will by the user and/or only being exchangeable for another cryptographic algorithm at will by that user.

2. Process according to claim 1, **characterized by** the fact that no readout is possible of the algorithm from the cryptographic unit (1).

3. Device for coding and decoding information, for storing coded information and for decoding information previously coded and stored, incorporating
- a first processor (2) for processing information,
- an input unit linked to the first processor (2), by means of which inputting of the non-coded information and feeding to the first processor (2) is rendered possible,
- an output unit linked to the first processor (2), on which the information is capable of being displayed in non-coded form,
- a cryptographic unit (1), by means of which the information can be coded and afterwards decoded again applying a cryptographic algorithm,
- a bulk-storage memory module (3), in which the coded information can be stored and from which the said coded information can be read out again, in which case the cryptographic unit (1) is installed between the first processor (2) and the bulk-storage memory module (3),
**characterized by**
- the cryptographic unit (1) having its own processor and own memory module (4) assigned to it, the latter containing the said cryptographic algorithm,
- the possibility of inscribing or overwriting the memory module (4) of the cryptographic unit (1) with a cryptographic algorithm by means of that processor having the cryptographic unit (1) allocated to it, and
- the cryptographic algorithm contained in the memory module (4) only being erasable at will by the user and/or only being exchangeable for another cryptographic algorithm at will by that user.

4. Device according to claim 3, **characterized by** the cryptographic unit (1) revealing an interface (5), by means of which any desired cryptographic algorithm can be transferred to the memory module (4).

5. Device according to claim 3 or 4, **characterized by** the fact that no readout is possible on the memory module (4).

6. Device according to one or several claims 3 to 5, **characterized by** the processor assigned to the cryptographic unit (1) as well as the memory module (4) being integrated into one component.

## Revendications

1. Procédé d'encodage et de décodage d'une information, de stockage de l'information encodée, de décodage de l'information mémorisée sous forme codée,
- tout en utilisant un premier processeur (2) pour le traitement des informations.
- Ensuite, l'information non codée sera introduite au moyen d'une unité d'entrée reliée à ce premier processeur et acheminée par la suite au premier processeur (2)-,
- L'unité de sortie connectée au premier processeur (2) permettra d'afficher l'information sous forme non codée.
- l'information (1) sera codée et décodée à l'aide d'une unité cryptographique (1) en utilisant un algorithme cryptographique.
- Une mémoire de masse (3) sauvegardera l'information encodée et permettra la relecture de celle-ci.
Le trait distinctif de ce procédé est que
- l'unité cryptographique (1), disposée entre le premier processeur (2) et la mémoire de masse (3), soit caractérisée de façon
- à ce que l'unité cryptographique (1) se trouvera en coordination constante interactive avec son propre processeur et sa propre mémoire (4), contenant l'algorithme cryptographique.
Le procédé se distingue par le fait que
le processeur en cause attribué à l'unité cryptographique (1) permet une transcription et une sur- transcription de la mémoire (4) contenue dans l'unité cryptographique (1) en se servant d'un algorithme cryptographique et que l'algorithme cryptographique contenu dans la mémoire (4) ne pourra être effacé que par l'utilisateur, et ce à volonté, et/ou échangé par un autre algorithme cryptographique.

2. Le procédé ci-après, d'après la première prétention de brevet, est **caractérisé par le fait que** l'algorithme ne peut pas être lu à partir de l'unité cryptographique (1).

3. Dispositif pour l'encodage et le décodage d'une information, pour la sauvegarde de l'information encodée, pour le décodage de l'information sauvegardée de façon codée, étant doté
- d'un premier processeur (2) destiné au traitement d'une information, d'une unité d'entrée reliée au premier processeur (2) qui sert à introduire l'information non codée et à l'acheminer vers le premier processeur (2).
- De plus, le présent dispositif est équipé d'une unité de sortie reliée au premier processeur (2), qui permet d'afficher l'information sous forme non codée,
- par ailleurs d'une unité cryptographique (1) qui permet de coder et de décoder l'information en utilisant un algorithme cryptographique.
- Le dispositif dispose, en outre, d'une mémoire de masse (3) dans laquelle l'information encodée peut être sauvegardée, et qui permet à tout moment la relecture de l'information encodée, l'unité cryptographique (1) qui est disposée entre le premier processeur (2) et la mémoire en masse (3),
étant **caractérisée par le fait**
- **qu'**un propre processeur et une propre mémoire (4) renfermant l'algorithme cryptographique sont affectés à l'unité cryptographique concernée (1),
- par le fait que la transcription et la surtranscription de la mémoire (4) de l'unité cryptographique (1) au moyen d'un son propre processeur attribué à cette même unité cryptographique (1) à l'aide d'un algorithme cryptographique sont rendues possibles ; et qu'en outre, seul l'utilisateur pourra effacer et/ou échanger à son gré l'algorithme cryptographique contenu dans la mémoire (4).

4. Dispositif conforme aux exigences stipulées au point n° 3, **caractérisée par** une interface (5) située sur l'unité cryptographique (1), qui permet de transmettre n'importe quel algorithme cryptographique dans la mémoire (4).

5. Dispositif conforme aux points n^{os} 3 ou 4, **caractérisé par le fait que** la lecture de la mémoire (4) n'est pas possible.

6. Dispositif conforme à une ou à plusieurs des exigences fixées par les points 3 à 5, dont la caractéristique est que le processeur et la mémoire (4) attribués à l'unité cryptographique (1), se trouvent intégrés dans un module constructif.
